Europäisches Patentamt

European Patent Office

Office européen des brevets

(11) Publication number: **0 177 096**

A1

## (12) EUROPEAN PATENT APPLICATION

(21) Application number: 85201532.0

(22) Date of filing: 24.09.85

(51) Int. Cl.⁴: **C 08 L 55/02**
C 08 L 25/12, C 08 F 279/04

(30) Priority: 28.09.84 IT 2290984

(43) Date of publication of application:
09.04.86 Bulletin 86/15

(84) Designated Contracting States:
AT BE CH DE FR GB LI LU NL SE

(71) Applicant: ENICHEM POLIMERI S.p.A.
Via Mazzini 8
I-07100 Sassari(IT)

(72) Inventor: Ferri, Gualtiero
Via Padova 32
I-44100 Ferrara(IT)

(72) Inventor: Pivotto, Bruno
Via Fabbri 204
I-44100 Ferrara(IT)

(72) Inventor: Roma, Pierpaolo
Via Bologna 301
I-44100 Ferrara(IT)

(74) Representative: Roggero, Sergio et al,
Ing. Barzanò & Zanardo Milano S.p.A. Via Borgonuovo 10
I-20121 Milano(IT)

(54) Abs-based composition with improved characteristics, and method for preparing them.

(57) Compositions on the basis of ABS, with very high impact resistance and flowability containing from 0.1 to 3% by weight of a mineral or silicone oil are prepared by means of a method envisaging that these oils be added to the mixture of polybutadiene, acrylonitrile and styrene during the grafting reaction of such monomers onto the polybutadiene, carried out in an emulsion system.

EP 0 177 096 A1

The present invention relates to new compositions provided with improved impact resistance, based on grafted copolymers of styrene and acrylonitrile onto polybutadiene: it relates moreover to a particular method for the preparation of the same compositions.

It is already known how to prepare plasto-elastomeric compositions (ABS polymers) by means of the mixing of grafted polymeric products, in this case of polymers of styrene and acrylonitrile polymerized on polybutadiene rubbers, with thermoplastic resins constituted by styrene and acrylonitrile copolymers (SAN resins).

Such compositions display, as their particular characteristic, high impact resistance combined with high hardness and ultimate tensile strength, and good thermal and flowability properties.

For particular applications however these materials may display a quite unsuitable flowability/impact strength balance, as well as the decrease of impact resistance to the low temperatures.

As a consequence, in addition to the actual polymerization process, the production of ABS polymers involves a mixing step with additives capable to obviate or reduce the said drawbacks.

The additives proposed to that purpose, having generally a lubricating action, are esters of monocarboxylic saturated aliphatic acids with polyvalent alcohols of high molecular weight (U.S. Patent Nr. 4,174,325), or combinations of silicone oils with calcium or pentaerythritol stearates (U.S. Patent N. 4,248,778), or siloxane-urethanes (European Patent Nr. 8,723) or finally, paraffinic or naphthenic or aromatic mineral oils with a particular viscosity value (U.S. Patent Nr. 3,403,120).

The preparation of the blends of the polymeric components (grafted polybutadiene rubber and SAN copolymers) and of the above said additives is done, according to the techniques used up to date, by adding these latter to the coagulum of the latex of such polymeric components, or by the incorporation of the additives, effected on suitable blenders, inside the anhydrous pellets of the polymeric blend, or finally by admixing the polymer blend into the latex, then coaguating the latex.

So, e.g., the already mentioned U.S. Patent Nr. 3,403,120 discloses the several methods for blending the polymeric components and the suitable additives, all such methods being within the above reported definitions. The end composition however shows always a percentage of mineral oil (or of an equivalent additive) greater than 3% by weight.

Now, if the introduction of the oil into the blends constituted by the ABS polymers and by the SAN resins allows the above mentioned drawbacks to be overcome, the presence of too high, or however greater than certain values, amounts, can cause the arising in the end product of other drawbacks, such as their migration to the surface of the fabricated items, which causes the loss or the decrease of typical ABS characteristics (such as e.g. the surface brightness, embrittlement in correspondence of the welding of the fluid flows); difficulties of preparation of the blends by means of the industrial technologies traditionally applied.

It has now been surprisingly found, that constitutes the main object of the present invention, that it is possible to improve . to an unforeseeable extent the characteristics of flowability and of impact resistance of the compositions on the basis of ABS, without however im pairing the other valuable characteristics of the same polymers by means of the addition of mineral and/or silicone oils to the polymeric blend in such amounts that the end composition does not contain percentages of the said additives also lower than 3%.

A first object of the present invention are hence compositions on the basis of ABS provided with high impact resistance and flowability, comprising the following components:

A. from 5 to 97% by weight of a  graft  polymer obtained by means of the graft copolymerization of:

    a. from 10 to 90% by weight of a mixture of acrylonitrile and styrene, containing from 50 to 90% by weight of styrene;

    b. from 90 to 10% by weight of polybutadiene;

B. from 10 to 90% by weight of:

    c. a thermoplastic copolymer of acrylonitrile with styrene and/or α-methylstyrene, containing from 50 to 5% by weight of acrylonitrile, or

    d. a thermoplastic terpolymer of acrylonitrile with styrene and/or α-methylstyrene and a third monomer selected from methylmethacrylate and maleic anhydride, containing from 50 to 5% by weight of acrylonitrile and from 50 to 95% by weight of styrene and/or α-methylstyrene, or

    e. mixtures of copolymer c. with terpolymer d.

C. from 0.1 to 3% of a mineral or silicone oil.

As mineral oils, the paraffinic oils with straight or branched chain containing at least 20 carbon atoms may be used; or the naphthenic or relatively naphthenic - i.e., constituted at least prevailingly by saturated, monocyclic (of from 4 to 12 carbon atoms) and polycyclic (of from 13 to 26 carbon atoms) hydrocarbons - oils; or the aromatic oils having a minimum molecular weight around 300 may be used; all these oils showing a minimum flash point in closed cup, according to ASTM D 93, of 150°C.

As the silicone oils, those commercially known, e.g. from the dimethylsiloxane family, may be used.

The above described compositions can be obtained by adding the above mentioned oils during the end stage of the grafting reaction, before the coagulation of the latex og the grafted polymer; the migration to the interior of the polymer is in that case favoured by mixing the blend at a temperature of 40°C, and then coagulating the latex by means of the usual techniques.

Such composition can be obtained as well according to one of the known methods which we have recalled in the introductory section of the present disclosure, e.g. with reference to the U.S. Patent Nr. 3,403,120, or by means of a method which allows a greater control of the introduced amount of mineral or silicone oil. This method, which constitutes a further object of the present invention, and which can be obviously applied also to the preparation of compositions containing additive percentages greater than 30%, foresees that the addition of the mineral or silicone oils, as above defined, be effected to the blend of polybutadiene, acrylonitrile and styrene during the grafting reaction of said monomers onto the polybutadiene, carried out according to an emulsion method.

The addition of such oils may be done at the beginning of the reaction, or during the same reaction. The second object of the present invention is hence constituted by a method for obtaining ABS copolymers provided with improved characteristics of flowability and of mechanical strength, containing oil amounts of from 0.1 to 10%, comprising the steps of polymerization of mixtures of acrylonitrile and styrene in the presence of polybutadiene, with the formation of an acrylonitrile/styrene copolymer grafted onto said polybutadiene, and of subsequent blending of such graft copolymer with copolymers on the basis of acrylonitrile and styrene, characterized in that such polymerization is carried out in an aqueous emulsion in the presence of from 0.1 to 50% by weight of a mineral oil and/or of a silicone oil, relatively to the total weight of the end mixture of polymer grafted with the acrylonitrile/styrene copolymer.

Going now back to the definition of the constituents of the ABS-based composition, first object of the present invention, the graft copolymer A can be prepared in a known way, by polymerizing the monomers (styrene and acrylonitrile) in an aqueous latex of polybutadiene in the weight percentages as defined above, in the presence of catalysts (such as peroxides, hydroperoxides and so forth) and of the usual amounts and types of emulsifiers, pH adjusters, etc.

The thermoplastic copolymer or terpolymer/B can be prepared it too in a known way, by polymerizing the monomers in an aqueous emulsion, in suspension or in bulk, in the

0177096

hereinabove defined mutual ratios, in the presence of the analogous amounts and types of catalysts, emulsifiers, etc., as used for preparing the graft polymer A. The polymerization temperature, for the preparation of both A and B copolymers, is selected according to the type of process used.

According to the method of the present invention, as hereinabove disclosed, the mineral and/or silicone oil is added to the mixture of polybutadiene and monomers during the preparation of the graft polymer A.

The invention is now illustrated by the following Examples, to which however it is not be intended as being limited.

### Example 1

6253 Grams of a latex containing 34% by weight of polybutadiene, with an average size of the particles of from 1000 to 8000 $\overset{o}{A}$ are charged inside a reactor together with a mixture formed by 2305 g of styrene and 874 g of acrylonitrile. To it 265 g are then added of a prevailingly paraffinic oil, of Engler viscosity at 50°C of 23.8; and the catalyst, constituted by 5.3 g of cumene hydroperoxide, 3.89 g of activator (iron-EDTA), 7.3 g of Rhodite.

The mixture is then allowed to react for 5 hours and 45 minutes at 70°C.

The so-obtained polymer is coagulated with a 35% $CaCl_2$ solution, is separated, washed and dried at 70 - 80°C. The dried product is then blended in a Banbury type blender with different amounts of a thermoplastic styrene/ acrylonitrile (SAN) copolymer, with a weight ratio of the two monomers of 71/29, a series being obtained of five products characterized by the following weight contents:

|  | Graft polybutadiene, % | SAN Copolymer % | Paraffinic oil, % |
|---|---|---|---|
| 1st Product | 23.82 | 75 | 1.18 |
| 2nd Product | 35.72 | 62.5 | 1.78 |
| 3rd Product | 47.63 | 50 | 2.37 |
| 4th Product | 22.75 | 75 | 2.25 |
| 5th Product | 30.23 | 66.78 | 2.99 |

### Examples 2 - 4

The process is carried out in an analogous way to that of Example 1, with the difference that in place of the paraffinic oil similar amounts of a naphthenic oil having an Engler viscosity at 50°C of 18.3, of an aromatic oil having an Engler viscosity at 50°C of 2.75, and of a silicone oil having an Engler viscosity at 50°C of 11.4 are respectively used, for each oil five end products being obtained of composition analogous to that of those of Example 1.

In Table I the physical and mechanical characteristics of the products of Examples 1 - 4 are reported.

In the following prospectus some characteristics are reported of the oils used in the Examples.

| Oil | Engler Viscosity °E / 50°C | Refractive index $n_{20}^{D}$ | Kinematic viscosity Cst / 50°C | Specific gravity at 15°C, g/cc |
|---|---|---|---|---|
| Paraffinic | 23.8 | 1.4950 | 179.7 | 0.8905 |
| Naphthenic | 18.3 | 1.520 | 139 | 0.8870 |
| Aromatic | 27.5 | 1.5590 | 189 | 0.9885 |
| Silicone | 11.4 | 1.4066 | 86.3 | 0.9700 |

TABLE I

| Example | Graft Poly-butadiene, % | SAN Copolymer % | Oil, % | Impact Strength, 120 D 1/4 at 23°C, $kg\ cm/cm^2$ | R Hard-ness | VICAT (5 kg at 120°C, C/h) | Flowa-bility at 230° C, cm | Flowa-bility at 250° C, cm |
|---|---|---|---|---|---|---|---|---|
| 1 | 23.82 | 75 | 1.18 | 14.2 | 117 | 101.5 | 35.5 | 44 |
|   | 35.72 | 62.5 | 1.78 | 24.2 | 111.5 | 99.5 | 30 | 37.7 |
|   | 47.63 | 50 | 2.37 | 29.8 | 113.5 | 97 | 25.5 | 30.5 |
|   | 22.75 | 75 | 2.25 | 19.4 | 113 | 99.5 | 37 | 45 |
|   | 30.23 | 66.78 | 2.99 | 22.6 | 110 | 98 | 35 | 42.5 |
| 2 | 23.82 | 75 | 1.18 | 11.7 | 117 | 103 | 36 | 43 |
|   | 35.72 | 62.5 | 1.78 | 20.5 | 109.5 | 102 | 32 | 40 |
|   | 47.63 | 50 | 2.37 | 27.4 | 103 | 101 | 27 | 34 |
|   | 22.75 | 75 | 2.25 | 17.2 | 114 | 97 | 36 | 45 |
|   | 30.23 | 66.78 | 2.99 | 19.1 | 104 | 96 | 35 | 42 |
| 3 | 23.82 | 75 | 1.18 | 13 | 118 | 100 | 37 | 46 |
|   | 35.72 | 62.5 | 1.78 | 23.3 | 113 | 99 | 32 | 40 |
|   | 47.63 | 50 | 2.37 | 28.2 | 106 | 96 | 26 | 31.5 |
|   | 22.75 | 75 | 2.25 | 18.8 | 117 | 97 | 45 | 55 |
|   | 30.23 | 66.78 | 2.99 | 22.2 | 109 | 94 | 39.5 | 49.5 |

0177096

(follows TABLE I)

| Example | Graft Poly-butadiene,% | SAN Copolymer % | Oil, % | Impact Strength 120 D 1/4 at 23°C, $kg\ cm/cm^2$ | R Hard-ness | VICAT (5 kg at 120°C, C/h) | Flowa-bility at 230° C, cm | Flowa-bility at 250° C, cm |
|---|---|---|---|---|---|---|---|---|
| 4 | 23.82 | 75 | 1.18 | 13 | 116.5 | 101 | 36 | 45 |
| | 35.72 | 62.5 | 1.78 | 24.8 | 111 | 100 | 30 | 38 |
| | 47.63 | 50 | 2.37 | 23.6 | 112.5 | 97 | 27 | 32 |
| | 22.75 | 75 | 2.25 | 17.2 | 112 | 97 | 37 | 47 |
| | 30.23 | 66.78 | 2.99 | 19.6 | 110 | 96 | 36 | 45 |

9.

### Example 5

.  In a "Banbury" type blender polybutadiene grafted with styrene-acrylonitrile (GR = 40/60) and a SAN copolymer having a ST/ACN ratio of 71/29 are blended in the presence of paraffinic oil, respectively in the PBI/SAN/Oil ratios of:

```
1  -  23.5/75/1.5
2  -  29.15/69/1.85
3  -  34.8/63/2.2
4  -  40.4/57/2.6
5  -  47.1/50/2.9
```

In Table 2 the main physical-mechanical properties of the so-obtained products are reported.

### Example 6

Similarly to Example 5, but using a graft polybutadiene with a grafting ratio of 50/50 (see Table 3).

### Example 7

Similarly to Example 5, but using a graft polybutadiene with a graft ratio of 60/40 (see table 4).

### Example 8

Similarly to Example 5, but using a graft polybutadiene with grafting ratio (GR) of 40/60 and a SAN copolymer with a ST/ACN ratio of 71/29 in the presence of a paraffinic oil respectively in the Graft polybutadiene/SAN/Oil of:

```
1  -  25/75/0
2  -  25/74/1
3  -  25/73/2
4  -  25/72.01/2.99
5  -  25/70/5
6  -  25/65/10
```

7 - 25/55/20

In Table 5 the main physical-mechanical characteristics of the so-obtained compounds are reported.

## Example 9

Similarly to Example 5, using a graft polybutadiene with a GR of 40/60 and a SAN copolymer having a ST/ACN ratio of 71/29 in the presence of oils and/or lubricants of different nature, respectively in the Graft polybutadiene/SAN/Oil ratio of 22.7/75/2.3.

In Table 6 some physical-mechanical characteristics of the products so obtained are reported.

## Comparison in the absence of oil

In the comparison Examples of Table 7 (A, B, C, D, E), the values of the physical-mechanical characteristics of the products obtained in the absence of oil are evidenced, similarly to the Examples shown in Table 2 (1, 2, 3, 4, 5). Also these products are blended in a "Banbury" type blender, the graft polybutadiene used has a GR of 40/60, the SAN used a ST/ACN ratio of 71/29.

The blending Graft polymer/SAN copolymer ratios respectively used are:

A - 25/75

B - 31/69

C - 37/63

D - 43/57

E - 50/50.

12.

0177096

TABLE 2. Extension with paraffinic oil

|  | 1 | 2 | 3 | 4 | 5 |
|---|---|---|---|---|---|
| Graft polybuta diene (40/60) | 23.5 | 29.15 | 34.8 | 40.4 | 47.1 |
| SAN | 75 | 69 | 63 | 57 | 50 |
| Paraffinic oil | 1.5 | 1.85 | 2.2 | 2.6 | 2.9 |
| Impact strength | 15.4 | 19.5 | 22.2 | 25.8 | 29 |
| Flowability | 36.5 | 34 | 31 | 28 | 25 |
| VICAT | 101 | 100 | 99 | 98 | 96 |

TABLE 3. Extension with paraffinic oil

| Graft polybuta diene (50/50) | 18.8 | 23.3 | 27.8 | 32.3 | 37.7 |
|---|---|---|---|---|---|
| SAN | 79.7 | 74.85 | 70 | 65.1 | 59.4 |
| Paraffinic oil | 1.5 | 1.85 | 2.2 | 2.6 | 2.9 |
| Impact strength | 14 | — 18 | 22 | 26 | 30 |
| Flowability | 40 | 37 | 34 | 31 | 28 |
| VICAT | 100.5 | 100 | 99 | 98 | 96 |

TABLE 4. Extension with paraffinic oil

| Graft polybuta diene ( 60/40) | 15.7 | 19.4 | 23 | 27 | 31.4 |
|---|---|---|---|---|---|
| SAN | 82.8 | 78.75 | 74.8 | 70.4 | 65.9 |
| Paraffinic oil | 1.5 | 1.85 | 2.2 | 2.6 | 2.9 |
| Impact strength | 14.1 | 19.9 | 23 | 26.1 | 28.1 |
| Flowability | 41 | 38 | 36 | 32 | 30 |
| VICAT | 102 | 101 | 100.5 | 98.5 | 97 |

TABLE 5. <u>Extension with paraffinic oil: effect of concentration</u>

| | | | | | | | |
|---|---|---|---|---|---|---|---|
| Graft polybutadiene (40/60) | 25 | 25 | 25 | 25 | 25 | 25 | 25 |
| SAN | 75 | 74 | 73 | 72.01 | 70 | 65 | 55 |
| Paraffinic oil | – | 1 | 2 | 2.99 | 5 | 10 | 20 |
| Impact strength | 9.8 | 13.5 | 16.8 | 20.4 | 21 | 20.8 | n.d. |
| Flowability | 36.5 | 37 | 36 | 35.5 | 36 | 37 | n.d. |
| VICAT | 101 | 100.5 | 100 | 99 | 95 | 90 | n.d. |

TABLE 6. <u>Extension with different oils</u>

| | | | | | | |
|---|---|---|---|---|---|---|
| Graft polybutadiene (40/60) | | | 22.7 | | | |
| SAN | | | 75 | | | |
| Paraffinic oil | - | 2.3 | | | | |
| Naphthenic oil | - | | 2.3 | | | |
| Aromatic oil | - | | | 2.3 | | |
| Silicone oil | - | | | | 2.3 | |
| Ropy vaseline | - | | | | | 2.3 |
| Impact strength | 9.8 | 19.5 | 18 | 19 | 17.8 | 19.7 |
| Flowability | 36.5 | 37.5 | 37 | 36.5 | 37 | 36 |
| VICAT | 101 | 100 | 99 | 99 | 99 | 100 |

14.

TABLE 7. <u>Reference tests – No oil added</u>

|  | A | B | C | D | E |
|---|---|---|---|---|---|
| Graft polybuta-diene (40/60) | 25 | 31 | 37 | 43 | 50 |
| SAN | 75 | 69 | 63 | 57 | 50 |
| Impact strength | 9.8 | 14 | 18 | 21.2 | 24.4 |
| Flowability | 36.5 | 33 | 30.5 | 28 | 25 |
| VICAT | 101 | 100 | 99 | 98 | 96 |

## C l a i m s

1. Compositions on the basis of ABS provided with high impact resistance and flowability, comprising the following components:

A) from 5 to 97% by weight of a graft polymer obtained by means of the graft polymerization of:

   a) from 10 to 90% by weight of a mixture of acrylonitrile and styrene, containing from 50 to 90% by weight of styrene;

   b) from 90 to 10% by weight of polybutadiene;

B) from 10 to 90% by weight of:

   c) a thermoplastic copolymer of acrylonitrile with styrene and/or α-methylstyrene, containing from 50 to 5% by weight of acrylonitrile, or

   d) a thermoplastic terpolymer of acrylonitrile with styrene and/or α-methylstyrene and a third monomer selected from methylmethacrylate and maleic anhydride, containing from 50 to 5% by weight of acrylo nitrile and from 50 to 95% by weight of styrene and/or α-methylstyrene, or

   e) mixtures of copolymer (c) with terpolymer (d),

C) from 0.1 to 3% of a mineral or silicone oil.

2. Method for the preparation of ABS copolymers provided with improved characteristics of flowability and mechanical strength, comprising amounts of mineral and silicone oils of from 0.1 to 20% by weight, comprising the steps of polymerization of acrylonitrile and styrene in the presence of polybutadiene, with the formation of an acrylonitrile/styrene copolymer grafted onto said polybutadiene, and of subsequent blending of such grafted copolymer with copolymers on the basis of acrylonitrile and styrene, characterized in that the polymerization is carried out in an aqueous emulsion, in the presence of from 0.1 to 50% by weight of a mineral or silicone oil.

3. Compositions on the basis of ABS according to claim 1, wherein the mineral oils are selected from (i) straight- or branched-chain paraffinic oils, containing at least 20 carbon atoms, (ii) naphthenic or relatively naphthenic, monocyclic or polycyclic oils, (iii) aromatic oils having a minimum molecular weight of 300, all these oils showing a minimum closed-cup flash point, according to ASTM D 93, of 150°C.

# EUROPEAN SEARCH REPORT

**European Patent Office**

**0177096** Application number

EP 85 20 1532

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 039 022 (MITSUBISHI) <br> * Claims * <br><br> ----- | 1 | C 08 L 55/02 <br> C 08 L 25/12 <br> C 08 F 279/04 |
|  |  |  | **TECHNICAL FIELDS SEARCHED (Int Cl 4)** |
|  |  |  | C 08 L <br> C 08 F |

The present search report has been drawn up for all claims

| Place of search | Date of completion of the search | Examiner |
|---|---|---|
| THE HAGUE | 11-12-1985 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82